# EUROPEAN PATENT APPLICATION

(11) **EP 3 536 988 A1**
(43) Date of publication of application: **11.09.2019**
(21) Application number: 19156226.3
(22) Date of filing: 08.02.2019
(51) Int. Cl.: F16B 19/02, F16B 5/02, F16B 5/06

(54) **AN ASSEMBLY AND METHOD FOR ATTACHING TWO COMPONENTS**

(30) Priority: 08.03.2018 GB 201803716
(71) Applicant: Ford Global Technologies, LLC, Dearborn, MI 48126-2738 (US)
(72) Inventor: PONTER, Christopher, Romford, Essex RM3 0LQ (GB)
(74) Representative: Haseltine Lake Kempner LLP

(57) **Abstract**

An assembly comprising: a first component (10) having a bore; and a compression limiter (30) configured to fit inside and extend through the bore of the first component, the compression limiter having a bore (34) for receiving the fastener; wherein on a first side (10a) of the first component, the compression limiter presents a compression surface to a fastener (40), and wherein opposite the first side of the first component, the first component has a first mating surface (12) that is configured to face a second mating surface (22) of a second component (20), and wherein the compression limiter extends between the first and second sides of the first component and beyond the first mating surface so as to form an alignment feature (32) that protrudes from the first mating surface and aligns the first component with the second component during attachment of the first and second components.

## Description

### Technical Field

This disclosure relates generally to an assembly and method for attaching two components and particularly, although not exclusively, relates to an assembly and method for attaching and aligning two components within a motor vehicle.

### Background

When one component is joined to another, it is desirable that they are correctly aligned with respect to one another as they are brought into engagement. Traditionally this is done using alignment pins provided in one of the components and corresponding recesses in the other component. However, adding such alignment pins and recesses adds additional features to the components, which require fabrication, take up space and add cost.

### Statements of Invention

According to an aspect of the present disclosure, there is provided an assembly comprising:
a first component attachable to a second component with a fastener, the first component having a bore; and
a compression limiter configured to fit inside and extend through the bore of the first component, the compression limiter having a bore for receiving the fastener;
wherein on a first side of the first component, the compression limiter presents a compression surface to the fastener and receives a compressive force via said compression surface, and wherein on a second side of the first component opposite the first side of the first component, the first component has a first mating surface that is configured to face a second mating surface of the second component, and
wherein the compression limiter extends between the first and second sides of the first component and beyond the first mating surface so as to form an alignment feature that protrudes from the first mating surface and aligns the first component with the second component during attachment of the first and second components.

The compression limiter may comprise a flange at the first side of the first component. An end face of the flange may form the compression surface.

The compression limiter may be flush with the first side of the first component. Alternatively, an end face of the compression limiter may be proud of the first side of the first component.

The first component bore and compression limiter bore may be aligned with each other. The first component bore and compression limiter bore may be concentric.

The compression limiter may be fabricated from a material with a higher yield strength, e.g. compressive yield strength, than the material from which the first component is fabricated.

The alignment feature of the compression limiter may have a substantially constant diameter along its length. Alternatively, the alignment feature of the compression limiter may have a diameter that tapers along its length, e.g. with smaller diameter at its distal end.

The assembly may further comprise the second component. The second component may comprise a bore for receiving the fastener. The second component bore may have a first bore portion at, e.g. adjacent to, the second mating surface of the second component bore. The second component bore may have a second bore portion spaced apart, e.g. set back, from the second mating surface of the second component bore. The first and second bore portions may be adjacent one another. The first bore portion may have a diameter, e.g. average or minimum diameter, that is greater than the diameter of the second bore portion. The first bore portion may have a constant diameter. The first bore portion may form a counterbore. The first bore portion may have a variable diameter that varies with depth of the first bore portion. The first bore portion may be tapered, e.g. so that the second component bore is countersunk.

The shape and/or dimensions of the alignment feature of the compression limiter may correspond to the shape and/or dimensions of the first bore portion.

The fastener may be elongate. The fastener may comprise a threaded section. For example, the fastener may comprise a screw, bolt, stud or any other threaded fastener.

According to another aspect of the present disclosure, there is provided a method of attaching a first component and a second component together with a fastener, the first component having a first mating surface that is configured to face a second mating surface of the second component, wherein the method comprises:
providing a compression limiter inside and extending through a bore of the first component, wherein the compression limiter presents a compression surface to the fastener on a first side of the first component, and the first mating surface is on a second side of the first component opposite the first side of the first component, wherein the compression limiter extends between first and second sides of the first component and beyond the first mating surface so as to form an alignment feature that protrudes from the first mating surface;
aligning the first component with the second component during attachment of the first and second components; and
fastening the first and second components together with a fastener inserted through a bore of the compression limiter.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of the Drawings

For a better understanding of the present invention, and to show more clearly how it may be carried into effect, reference will now be made, by way of example, to the accompanying drawings, in which:
Figures 1a, 1b and 1c (collectively Figure 1) are side sectional views of an assembly according to an example of the present disclosure in which Figure 1a shows first and second components prior to engagement, Figure 1b shows the first and second components when mated, and Figure 1c shows the first and second components fastened together;
Figure 2 is a side sectional view of an assembly according to a further example of the present disclosure;
Figure 3 is a side sectional view of an assembly according to another example of the present disclosure; and
Figure 4 is a flow chart depicting a method according to an example of the present disclosure.

### Detailed Description

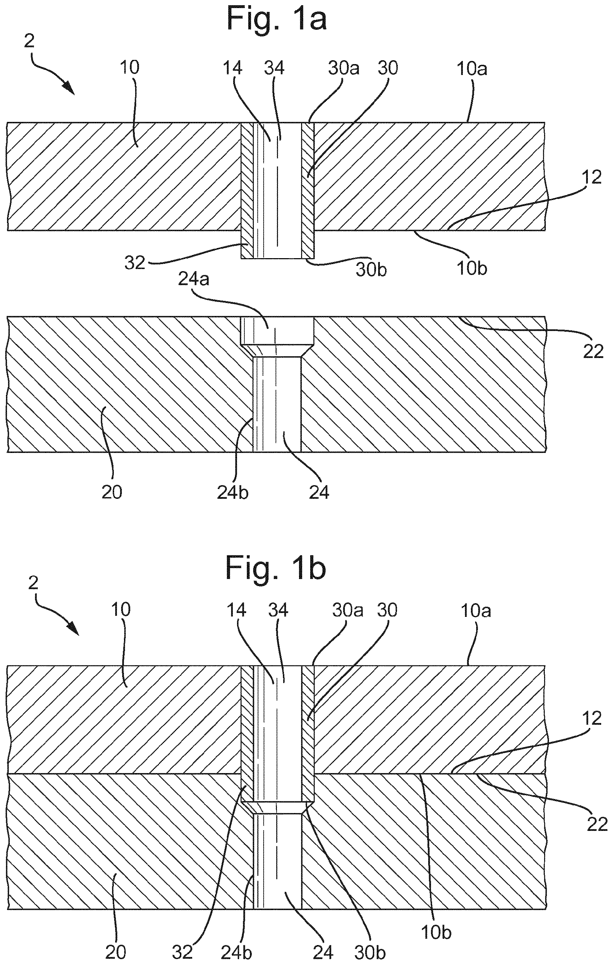

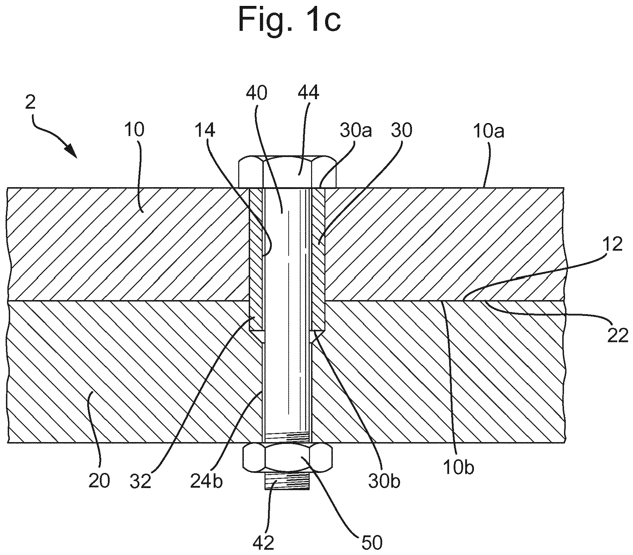

With reference to Figure 1, the present disclosure relates to an assembly 2 comprising a first component 10, which is to be connected to a second component 20. The first and second components may be components for a motor vehicle, such as an internal combustion engine of the motor vehicle. The first component 10 has a first mating surface 12 that is configured to face and mate with a second mating surface 22 of the second component 20. The assembly 2 further comprises a compression limiter 30, which is provided in a bore 14 of the first component. The external dimensions of the compression limiter 30 substantially correspond to the internal dimensions of the first component bore 14. Accordingly, the compression limiter 30 fits inside the first component bore 14, e.g. with an interference fit. In a particular example, the compression limiter 30 and first component bore 14 have circular cross-sections, however, other cross-sectional shapes are possible. For example, the external shape of the compression limiter 30 may be non-circular and the internal shape of the first component bore 14 may have a corresponding non-circular shape. Such non-circular shapes may prevent relative rotation of the first component 10 and compression limiter 30.

The compression limiter 30 extends through the first component bore 14 and extends from a first side 10a of the first component to a second side 10b of the first component. The first mating surface 12 is provided on the second side 10b of the first component. A first end 30a of the compression limiter 30 may be substantially flush with the surrounding surface at the first side 10a of the first component. By contrast, a second end 30b of the compression limiter 30 extends beyond the first mating surface 12 on the second side 10b of the first component. Accordingly, the second end 30b of the compression limiter 30 protrudes from the second side 10b of the first component 10. The protrusion of the second end 30b forms an alignment feature 32 that aligns the first component 10 with the second component 20 during assembly of the first and second components.

The second component 20 comprises a bore 24. The second component bore 24 may have a first bore portion 24a and a second bore portion 24b. The first bore portion 24a may be adjacent to the second mating surface 22 of the second component. The second bore portion 24b may be set back from the second mating surface 2, for example with the first bore portion 24a between the second bore portion 24b and the second mating surface 22. The first bore portion 24a has a diameter, e.g. an average or minimum diameter, that is greater than the diameter of the second bore portion 24b.

As depicted in Figures 1b and 1c, the alignment feature 32 of the compression limiter 30 may fit within the first bore portion 24a of the second component bore 24. The first bore portion 24a and alignment feature 32 may together cooperate to help align the first and second components 10, 20 during assembly. Accordingly, the shape and/or dimensions of the alignment feature 32 may correspond to the shape and/or dimensions of the first bore portion 24a.

The compression limiter 30 comprises a bore 34 that extends through the length of the compression limiter. The first component bore 14 and the compression limiter bore 34 may be aligned with each other so that they are co-axial. The compression limiter bore 34 may be circular in cross-section and in the event that the first component bore 14 is also circular, the first component bore 14 and compression limiter bore 34 may be concentric.

The compression limiter bore 34 receives a fastener 40, as depicted in Figure 1c. The fastener 40 is substantially elongate and passes through the compression limiter bore 34 and second component bore 24 so as to fasten the first and second components 10, 20 together. The fastener 40 may comprise a threaded section 42, which may engage a corresponding thread in the second component bore 24 or, as depicted, a nut 50 may engage the threaded section 42 of the fastener 40. The fastener 40 may comprise a head 44 at an opposite end to the threaded section 42. Accordingly, the fastener 40 may be a bolt. However, it is also envisaged that the fastener may comprise a screw, stud or any other type of fastener that is able to hold the first and second components 10, 20 together.

The fastener 40 applies a compressive force to the first and second components 10, 20. The compression limiter 30 presents a compression surface at its first end 30a to the fastener 40, e.g. the fastener head 44. The compression surface of the compression limiter 30 receives a compressive force from the fastener 40. The compression limiter 30 may be made from a material with a higher compressive yield strength than the material of the first component 10. For example, the compression limiter 30 may be made from a metal, ceramic or composite material. The first component 10 may be made from a weaker material, such as a plastics material. The compression limiter 30 may therefore protect the first component 10 from excessive compression forces applied by the fastener 40. In order to receive a compressive force, the compression limiter first end 30a may be flush with the first side 10a of the first component 10. Alternatively, the first end 30a of the compression limiter may be proud of the first side 10a of the first component.

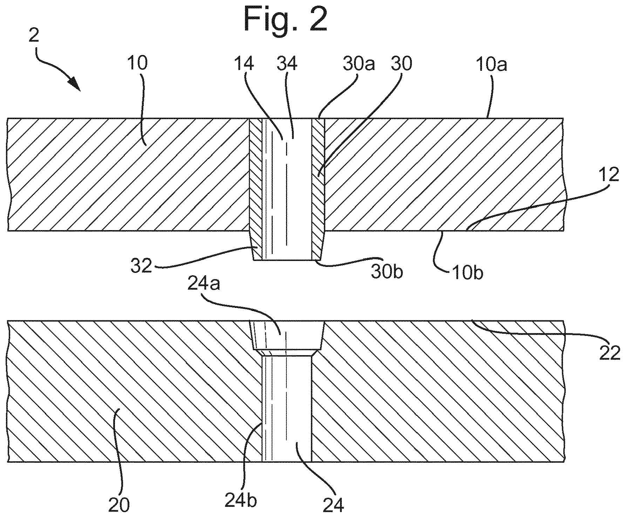

As shown in Figure 1, the alignment feature 32 of the compression limiter 30 may have a substantially constant diameter along its length. Likewise, the first bore portion 24a of the second component bore 24 may also have a constant diameter across its depth. The first bore portion 24a may thus form a counterbore. However, with reference to Figure 2, the alignment feature 32 of the compression limiter 30 may have a diameter that varies along its length. For example, the diameter of the alignment feature may taper along its length, in particular so that the diameter reduces towards the second end 30b of the compression limiter 30. The first bore portion 24a of the second component may have a diameter that varies in a manner corresponding to that of the alignment feature 32. For example, the first bore portion 24a may be tapered, e.g. so that the second component bore 24 is countersunk.

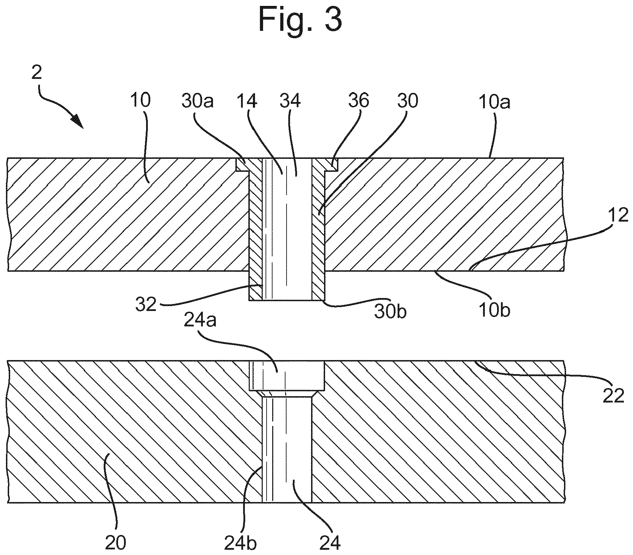

As depicted in Figure 1, the compression limiter 30 may have a substantially constant diameter between the first and second sides 10a, 10b of the first component. However, with reference to Figure 3, the compression limiter 30 may comprise a flange 36 at its first end 30a. As depicted, an end face of the flange 36 may be flush with the surrounding surface on the first side 10a of the first component. However, it is also envisaged that the flange 36 of the compression limiter may protrude from the first side 10a of the first component and thus sit proud of the surrounding surface. In either case, the alignment feature 32 of the second end 30b of the compression limiter may be straight or tapered as described above.

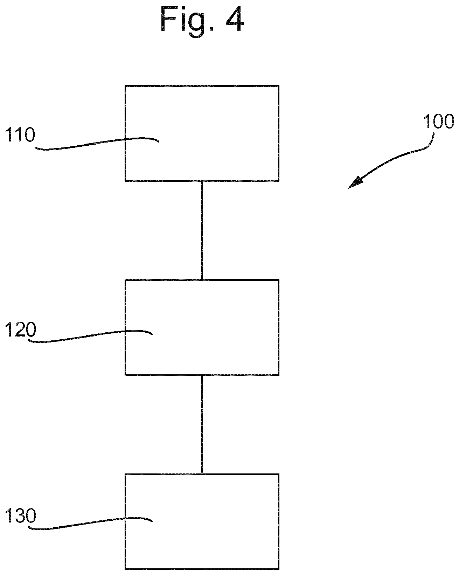

Referring now to Figure 4, the present disclosure also relates to a method 100 of attaching the first and second components 10, 20 with the fastener 40. In a first block 110 of the method 100 the compression limiter 30 is provided within the first component bore 14. The compression limiter 30 is arranged such that the alignment feature 32 protrudes beyond the first mating surface 12 of the first component. In a second block 120, the first and second components 10, 20 are brought together and aligned by virtue of the interaction of the alignment feature 32 with the second component bore 24. In a third block 130, the first and second components 10, 20 may be fastened together with the fastener 40. The fastener 40 may at this point be inserted through the compression limiter bore 34 or the fastener 40 may be pre-installed in the first component 10. With the first and second components 10, 20 aligned, the fastener 40 may pass through the second component bore 24 and may be secured via a threaded engagement with the second component or with the nut 50.

The first component 10 may be provided with one or more of the above-mentioned compression limiters 30. Likewise, the second component 20 may be provided with one or more corresponding second bores 24. However, for improved alignment between the first and second components 10, 20, the first component 10 may be provided with two or more of the above-described compression limiters 30 and the second component 20 may comprise two or more of the corresponding second bores 24.

It will be appreciated by those skilled in the art that although the invention has been described by way of example, with reference to one or more examples, it is not limited to the disclosed examples and alternative examples may be constructed without departing from the scope of the invention as defined by the appended claims.

## Claims

1. An assembly comprising:
a first component attachable to a second component with a fastener, the first component having a bore; and
a compression limiter configured to fit inside and extend through the bore of the first component, the compression limiter having a bore for receiving the fastener;
wherein on a first side of the first component, the compression limiter presents a compression surface to the fastener and receives a compressive force via said compression surface, and wherein on a second side of the first component opposite the first side of the first component, the first component has a first mating surface that is configured to face a second mating surface of the second component, and
wherein the compression limiter extends between the first and second sides of the first component and beyond the first mating surface so as to form an alignment feature that protrudes from the first mating surface and aligns the first component with the second component during attachment of the first and second components.

2. The assembly of claim 1, wherein the compression limiter comprises a flange at the first side of the first component, an end face of the flange forming the compression surface.

3. The assembly of claim 1 or 2, wherein the compression limiter is flush with the first side of the first component.

4. The assembly of any of the preceding claims, wherein the first component bore and compression limiter bore are aligned with each other.

5. The assembly of any of the preceding claims, wherein the compression limiter is fabricated from a material with a higher yield strength than the material from which the first component is fabricated.

6. The assembly of any of the preceding claims, wherein the alignment feature of the compression limiter has a substantially constant diameter along its length.

7. The assembly of any of claims 1 to 5, wherein the alignment feature of the compression limiter has a diameter that tapers along its length.

8. The assembly of any of the preceding claims, wherein the assembly further comprises the second component.

9. The assembly of claim 8, wherein the second component comprises a bore for receiving the fastener.

10. The assembly of claim 8 or 9, wherein the second component bore has a first bore portion at the second mating surface of the second component bore and a second bore portion away from the second mating surface of the second component bore, the first bore portion having a diameter that is greater than the diameter of the second bore portion.

11. The assembly of claim 10, wherein the first bore portion has a constant diameter.

12. The assembly of claim 10, wherein the first bore portion has a variable diameter that varies with depth of the second bore portion.

13. The assembly of any of claims 10 to 12, wherein the shape of the alignment feature of the compression limiter corresponds to the shape of the first bore portion.

14. The assembly of any of the preceding claims, wherein the fastener is elongate and comprises a threaded section.

15. A method of attaching a first component and a second component together with a fastener, the first component having a first mating surface that is configured to face a second mating surface of the second component, wherein the method comprises:
providing a compression limiter inside and extending through a bore of the first component, wherein the compression limiter presents a compression surface to the fastener on a first side of the first component, and the first mating surface is on a second side of the first component opposite the first side of the first component, wherein the compression limiter extends between first and second sides of the first component and beyond the first mating surface so as to form an alignment feature that protrudes from the first mating surface;
aligning the first component with the second component during attachment of the first and second components; and
fastening the first and second components together with a fastener inserted through a bore of the compression limiter.
